# EUROPÄISCHE PATENTSCHRIFT

(11) **EP 0 658 745 B1**
(45) Veröffentlichungstag und Bekanntmachung des Hinweises auf die Patenterteilung: **10.06.1998**
(21) Anmeldenummer: 94118887.2
(22) Anmeldetag: 30.11.1994
(51) Int. Cl.: G01D 3/08, G01P 3/488

(54) **Positionsdetektor**
Position detector
Capteur de position

(30) Priorität: 02.12.1993 DE 4341147; 09.12.1993 DE 4342069; 16.04.1994 DE 4413281
(43) Veröffentlichungstag der Anmeldung: 21.06.1995
(73) Patentinhaber: Mehnert, Walter, Dr., D-85521 Ottobrunn (DE); Theil, Thomas, D-82340 Feldafing. (DE)
(72) Erfinder: Mehnert, Walter, Dr., D-85521 Ottobrunn (DE); Theil, Thomas, D-82340 Feldafing. (DE)
(74) Vertreter: Strasser, Wolfgang, Dipl.-Phys

(56) Entgegenhaltungen:
- EP-A- 0 479 525
- WO-A-88/04780
- US-A- 3 826 985
- PATENT ABSTRACTS OF JAPAN vol. 12 no. 173 (P-706) ,24.Mai 1988 & JP-A-62 285012 (MITSUTOYO) 10.Dezember 1987,

## Beschreibung

Die Erfindung betrifft einen Positionsdetektor der im Oberbegriff des Anspruches 1 genannten Art.

Solche Positionsdetektoren finden beispielsweise als Komponenten von Umdrehungszählern Verwendung, die immer dann einen elektrischen Impuls abgeben und auf elektronischem Weg auswerten und speichern, wenn eine sich drehende Welle eine vorgewählte Winkelstellung durchläuft.

Ein Anwendungsbeispiel für solche Umdrehungszähler sind Werkzeugmaschinen, bei denen ein Grobmeßwert für die Position des Werkzeughalterschlittens durch Abzählen der Umdrehungen der Spindel gewonnen wird, die den Schlitten verstellt. Ein Problem ergibt sich dabei dadurch, daß bei einem Abschalten oder Ausfall der Stromversorgung für die Verarbeitungselektronik der Grobmeßwert für die Schlittenposition auch dann nicht verlorengehen bzw. nach dem Wiedereinschalten der Stromversorgung sofort zur Verfügung stehen soll, wenn die Spindel in der stromversorgungslosen Zeit beispielsweise von Hand um eine oder mehrere Umdrehungen gedreht worden ist.

Aus dem Stand der Technik sind zwei verschiedene Arten von Positionsdetektoren zur Lösung dieses Problemes bekannt. Bei der ersten Variante ist mit der sich drehenden Welle bzw. Spindel ein Untersetzungsgetriebe gekoppelt, dessen Ausgangswelle sich um maximal 360° dreht, wenn der Werkzeughalterschlitten seine gesamte Verstellänge durchläuft. Die Ausgangswelle des Untersetzungsgetriebes wird von einem Absolutenkoder überwacht, der ein Ausgangssignal liefert, das die jeweilige momentane Winkelstellung der Ausgangswelle des Untersetzungsgetriebes kennzeichnet und damit als Grobmeßwert für die momentane Schlittenposition dienen kann. Insbesondere bei langen Verstellwegen, zu deren Durchlaufen die Spindel eine große Zahl von Umdrehungen auszuführen hat, müssen das Untersetzungsgetriebe und der Absolutenkoder extrem hohen Genauigkeitsanforderungen genügen. Das Spiel im Untersetzungsgetriebe muß so klein gehalten werden, daß die Unbestimmtheit, die bei einer Drehrichtungsumkehr entsteht, kleiner als der Winkel ist, den der Absolutenkoder zur Erfassung einer Spindelumdrehung auflöst. Es ist klar, daß ein Untersetzungsgetriebe mit Absolutenkoder zur Erfassung eines Untersetzungsverhältnisses beispielsweise von 4000:1 einen hohen konstruktiven Aufwand erfordert, der mit entsprechend hohen Kosten verbunden ist. Außerdem sind solche Getriebe wegen ihres großen Massenträgheitsmoments für mittlere oder gar große Beschleunigungen und Drehzahlen nicht geeignet.

Eine andere Lösung besteht darin, einen einfachen optischen oder magnetischen Detektor so auszubilden, daß er immer dann, wenn eine an der sich drehenden Welle angebrachte Markierung an ihm vorbeiläuft, ein elektrisches Signal abgibt, das der Verarbeitungselektronik zugeführt wird, und diese Anordnung mit Hilfe einer Batterie so mit Energie zu versorgen, daß sie von der Hauptenergieversorgung der Werkzeugmaschine unabhängig ist. Ein solcher Umdrehungszähler ist zwar mit wesentlich geringeren Herstellungskosten verbunden, hat aber den Nachteil, daß eine ständige Überwachung und ein rechtzeitiger Austausch der Batterien erforderlich ist.

Demgegenüber liegt der Erfindung die Aufgabe zugrunde, einen Positionsdetektor der eingangs genannten Art so weiterzubilden, daß er einen einfachen mechanischen Aufbau besitzt und mit hoher Zuverlässigkeit auch dann noch bei Erreichen der vorgebbaren Position durch den sich bewegenden Körper einen ausreichend großen elektrischen Impuls abgibt, wenn sich der sich bewegende Körper an die vorgegebenen Position mit äußerst geringer insbesondere gegen Null gehender Geschwindigkeit annähert.

Zur Lösung dieser Aufgabe sieht die Erfindung die im Anspruch 1 niedergelegten Merkmale vor.

Diesen Maßnahmen liegt die Überlegung zugrunde, daß es möglich ist, einen Teil der Bewegungsenergie des sich bewegenden Körpers abzuzweigen und nicht nur zur Erzeugung des Signalimpulses sondern auch zur Energieversorgung der diesen Impuls verarbeitenden Auswertungselektronik zu verwenden. Ein einfacher Generator, der einen Teil der Bewegungsenergie des sich bewegenden Körpers unmittelbar in elektrische Energie umwandelt, hat aber den Nachteil, daß er bei einer sehr langsamen Bewegung und Annäherung an die vorgegebene Position nur ein sehr kleines dφ/dt liefert, so daß für die Verarbeitungselektronik nicht genügend Spannung und/oder Strom zur Verfügung steht. Um dieses Problem zu überwinden, ist gemäß der Erfindung ein Energiespeicher vorgesehen, der aus der Bewegungsenergie des sich bewegenden Körpers abgezweigte Energieanteile über einen gewissen Zeitraum hinweg sammelt und kumulativ speichert. Während sich also der sich bewegende Körper an die vorgegebene Position, bei deren Erreichen ein Signal ausgelöst und die Verarbeitungselektronik mit Energie versorgt werden soll, langsam annähert, wird bereits ständig ein Teil seiner Bewegungsenergie in den Energiespeicher in Form von potentieller Energie geladen. Hat dann der sich bewegende Körper die vorgegebene Position erreicht, wird diese potentielle Energie schlagartig freigesetzt und in kinetische Energie eines Elementes umgewandelt, das Bestandteil des Generators ist, der die gewünschte elektrische Energie erzeugt. Wegen der hohen Beschleunigung und der dadurch erzielbaren großen Geschwindigkeit dieses Elementes läßt sich ein dφ/dt erreichen, das eine für den angestrebten Zweck völlig ausreichende elektrische Leistung liefert.

Vorzugsweise wird das Massenträgheitsmoment der sich bewegenden Teile möglichst klein gehalten, um hohe Geschwindigkeiten zu erzielen.

Das beim schlagartigen Freisetzen der gespeicherten potentiellen Energie auf eine hohe Geschwindigkeit beschleunigte Element umfaßt vorzugsweise einen Permanentmagneten, der in etwa dann, wenn er seine maximale Geschwindigkeit erreicht hat, sich an einer Induktionsspule vorbeibewegt, um in dieser den gewünschten elektrischen Impuls zu induzieren. In seinem Hauptteil besteht dieser Impuls aus einer positiven und einer negativen Halbwelle mit sehr steilen Flanken, wobei die Reihenfolge, in der diese Halbwellen auftreten, vom Wicklungssinn der Spule und davon abhängt, ob der Magnet an der Spule mit seinem Nord- oder seinem Südpol vorbeiläuft.

In vielen Fällen kann eine Halbwellengleichrichtung ausreichend sein, um die für die Verarbeitungselektronik insbesondere zum Einschreiben eines erfaßten Umdrehungszählwertes in einen dauerhaften Speicher erforderliche Versorungsspannung zur Verfügung zu stellen. Sollte dies nicht genügen, kann auch die Spannungsdifferenz zwischen den beiden Halbwellenscheiteln durch eine Vollweggleichrichtung genutzt werden. Noch höhere Spannungen lassen sich dadurch erzielen, daß man mit der aus dem induzierten Impuls gewonnenen Gleichspannung mehrere zunächst parallel geschaltete Kondensatoren lädt, die dann zur Spannungs- und Stromabgabe an die Auswerteelektronik in Reihe geschaltet werden. Voraussetzung hierfür ist, daß die aus dem induzierten Impuls unmittelbar gewonnene Spannung zur Ansteuerung der Schaltlogik z.B. für das Umschalten der Kondensatoren ausreichend ist. Bei genügend kleiner Masseträgheit des Zwischenteils enthält die erste Halbwelle des Impulshauptteils wesentlich mehr Energie als die Auswerteelektronik für die Durchführung eines Speichervorganges benötigt. Daher ist es prinzipiell möglich, gewünschtenfalls die Induktionsspule bereits während des zeitlich späteren Teils dieser Halbwelle kurzzuschließen, um das Zwischenteil schell abzubremsen. Vorzugsweise wird hierfür jedoch die zweite Halbwelle genutzt.

Für den Fall, daß die Verarbeitungselektronik aus ihrer regulären Stromversorgungsquelle gespeist werden kann, ist es möglich, den Energiespeicher so von dem sich bewegenden Körper zu entkoppeln, daß er keine Anteile der kinetischen Energie des sich bewegenden Körpers mehr entnimmt und ansammelt. Bei diesem "Regelbetrieb" ist der erfindungsgemäße Positionsdetektor dann völlig rückwirkungsfrei.

Umgekehrt sind aber auch Einsatzfälle denkbar, in denen die Verarbeitungselektronik ihre gesamte elektrische Energie ausschließlich von einem gemäß der Erfindung aufgebauten Positionsdetektor erhält oder der erfindungsgemäße Positionsdetektor überhaupt nur zur Stromversorgung der Verarbeitungselektronik und allenfalls zur Gewinnung einer Information über die Bewegungsrichtung des sich bewegenden Körpers verwendet wird, während für die Positionsbestimmung ein zusätzlicher, vorzugsweise kapazitiver Sensor vorgesehen ist.

Weitere Ausgestaltungen und vorteilhafte Ausführungsformen des erfindungsgemäßen Positionsdetektors sind in den abhängigen Ansprüchen niedergelegt.

Die Erfindung wird im folgenden anhand von Ausführungsbeispielen unter Bezugnahme auf die Zeichnung beschrieben; in dieser zeigen:
- Fig. 1: in stark schematisierter Weise den Aufbau eines Positionsdetektors gemäß der Erfindung, der als Umdrehungszähler geeignet ist und bei dem der Energiespeicher von einer Blattfeder gebildet wird,
- Fig. 2: ebenfalls in stark schematisierter Weise den Aufbau eines als Umdrehungszähler geeigneten Positionsdetektors gemäß der Erfindung, bei dem die Energiespeicher jeweils von einer Magnetanordnung gebildet werden,
- Fig. 3: in schematischer Weise den Aufbau eines zur Überwachung einer linearen Verschiebung geeigneten erfindungsgemäßen Positionsdetektors, bei dem die Energiespeicher wieder von Magnetanordnungen gebildet werden,
- Fig. 4a und 4b: zwei verschiedene Stellungen einer weiteren Ausführungsform eines als Umdrehungszähler geeigneten Positionsdetektors gemäß der Erfindung, bei dem die Drehachse des Zwischenteils mit der Achse der sich drehenden Welle zusammenfällt,
- Fig. 5: eine schematisierte, perspektivische Darstellung eines Positionsdetektors mit E-förmigen Weicheisenkernen,
- Fig. 6: eine Schnittansicht durch eine praktische Ausführungsform eines erfindungsgemäßen Positonsdetektors, der als Umdrehungszähler in Verbindung mit einem Absolutwinkelgeber einen Multiturn bildet, und
- Fig. 7: eine perspektivische Darstellung eines erfindungsgemäßen Positionsdetektors, der beim Durchlaufen mehrerer, verschiedener Winkelstellungen einen der jeweiligen Winkelstellung zugeordneten Strom-Spannung-Impuls liefert.

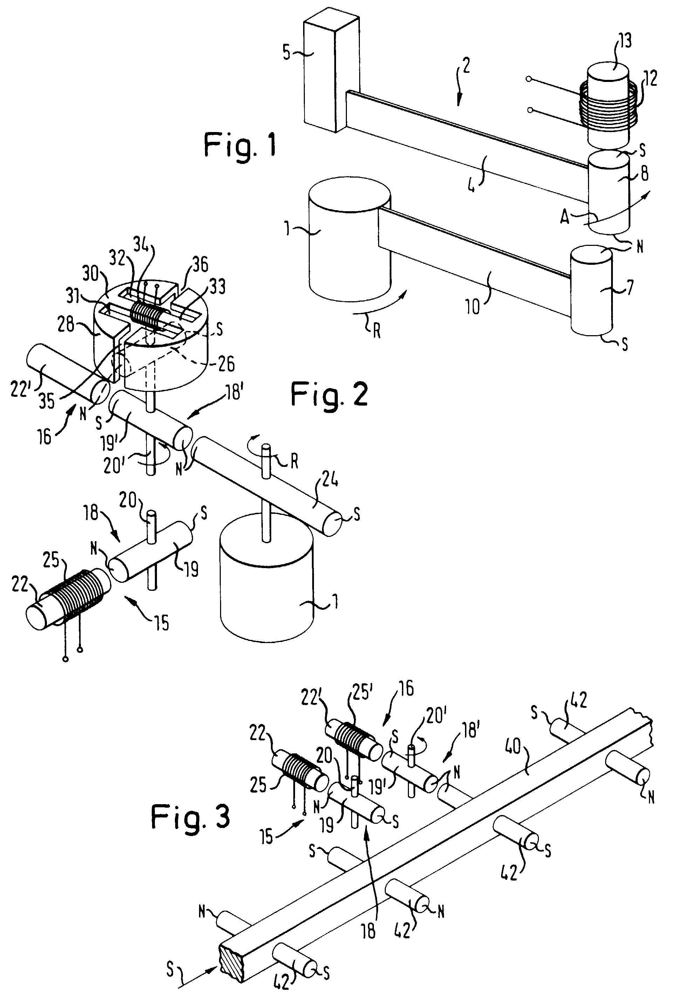

Bei der in Fig. 1 gezeigten Ausführungsform wird der sich bewegende Körper von einer Welle 1 gebildet, die sich in Richtung des Pfeiles R drehen kann. Um die Umdrehungen dieser Welle auch dann zählen zu können, wenn die nicht dargestellte Auswerteelektronik von ihrer regulären Stromversorgung getrennt ist und sich die Welle 1 nur sehr langsam bewegt, ist ein Energiespeicher 2 vorgesehen, der im vorliegenden Fall von einer Blattfeder 4 gebildet wird, die mit ihrem einen Ende so an einem drehfesten Halter 5 eingespannt ist, daß sie sich in etwa ausgehend von der Drehachse der Welle 1 in radialer Richtung erstreckt.

Damit dieser Energiespeicher 2 während der Annäherung des sich bewegenden Körpers an eine vorgebbare Position, d.h. im vorliegenden Fall während der Annäherung der rotierenden Welle 1 an eine vorgebbare Winkelstellung, einen Teil der Bewegungsenergie der rotierenden Welle 1 ansammeln und speichern kann, ist ein Mitnehmer vorgesehen, der das freie Ende der Blattfeder 4 aus der in Fig. 1 gezeigten Ausgangsstellung über einen bestimmten Winkel in Umfangsrichtung, d.h. in Richtung des Pfeiles A auslenkt, während sich die Welle 1 an die vorgebbare Winkelstellung annähert.

Bei dem in Fig. 1 gezeigten Positionsgeber wird dieser Mitnehmer von zwei Permanentmagneten 7, 8 gebildet, von denen der eine über einen sich radial zur Drehachse der Welle 1 erstreckenden, steifen Träger 10 drehfest mit der Welle 1 verbunden und so orientiert ist, daß seine Nord/Süd-Richtung in etwa parallel zur Welle 1 verläuft. Der zweite Permanentmagnet 8 ist an dem freien Ende der Blattfeder 4 so befestigt, daß er mit seiner Nord/Süd-Richtung möglichst genau antiparallel zum Permanentmagneten 7 ausgerichtet ist.

Die radiale Länge des Trägers 10 ist so gewählt, daß der Permanentmagnet 7 aufgrund der Drehung der Welle 1 möglichst genau unter dem Permanentmagneten 8 hindurchläuft, wobei der axiale Abstand zwischen diesen beiden Magneten sehr klein gehalten wird. Bei Annäherung des Permanentmagneten 7 an den Permanentmagneten 8 wird letzterer wegen der antiparallelen Orientierung abgestoßen. Da der Träger 10 und die Blattfeder 4 in axialer Richtung eine hohe Steifigkeit besitzen, weicht der Permanentmagnet 8 in radialer Richtung, d.h. in Richtung des Pfeiles A aus, wodurch die Blattfeder 4 gebogen und in zunehmendem Maße gespannt wird. Auf diese Weise wird ein Teil der Bewegungsenergie der rotierenden Welle 1 in Form potentieller Federenergie angesammelt und gespeichert.

Da die Rückstellkraft der Blattfeder 4 mit zunehmender Auslenkung zunimmt, wird bei fortschreitender Drehbewegung der Welle 1 in Richtung des Pfeiles R eine Auslenkposition erreicht, in der die Rückstellkraft der Blattfeder 4 die in Umfangsrichtung wirkenden Abstoßungskräfte zwischen den Permanentmagneten 7 und 8 überwindet, so daß der Permanentmagnet 8 auf der durch die Länge der Blattfeder 4 gegebenen gekrümmten Bahn in Richtung auf die in Fig. 1 gezeigte Ausgangsstellung, d.h. entgegen der Richtung des Pfeiles A stark beschleunigt wird. Auf diese Weise wird die in der Blattfeder 4 gespeicherte potentielle Energie in kinetische Energie umgewandelt.

Bei Erreichen der in Fig. 1 gezeigten Ausgangsposition besitzt der Permanentmagnet 8 seine maximale Geschwindigkeit, so daß er sich entgegen der Richtung des Pfeiles A über diese Stellung hinaus bewegt, wobei die Blattfeder 4 so lange zurückgebogen wird, bis die kinetische Energie wieder in potentielle Energie umgesetzt ist. Auf diese Weise kann sich der Permanentmagnet 8 prinzipiell mehrfach so lange hin- und herbewegen, bis aufgrund der vorhandenen Dämpfung die in der Blattfeder 4 ursprünglich gespeicherte Energie in Wärme umgewandelt ist und der Permanentmagnet 8 wieder in der in Fig. 1 gezeigten Ausgangslage zur Ruhe kommt.

Um die beim ersten Zurückfedern des Permanentmagneten 8 in ihm steckende kinetische Energie in einen elektrischen Energieimpuls umzuformen, ist eine Induktionsspule 12 vorgesehen, die auf einen Eisenkern 13 gewickelt ist, der in der Nähe der in Fig. 1 gezeigten Ausgangslage des Permanentmagneten 8 drehfest so angeordnet ist, daß sich beim Hindurchlaufen des Permanentmagneten 8 durch diese Ausgangslage der den Eisenkern 13 durchsetzende magnetische Fluß in sehr kurzer Zeit ändert. Aufgrund des so erzeugten großen dφ/dt wird in der Induktionsspule 12 eine Spannung induziert, die völlig ausreichend ist, um beispielsweise einen Kondensator aufzuladen, der als Strom/Spannungsquelle für die Verarbeitungselektronik dient und diese zumindest in die Lage versetzt, einen elektronischen Zähler zum Abzählen der von der Welle 1 durchlaufenen Umdrehungen um einen Zählwert zu erhöhen. Der in der Induktionsspule 12 erzeugte elektrische Energieimpuls hat somit zwei Funktionen: Er dient einerseits als Signalimpuls, der anzeigt, daß die rotierende Welle 1 eine bestimmte vorgegebene Winkelstellung durchlaufen hat und er dient gleichzeitig zur Energieversorgung der diesen Signalimpuls auswertenden Elektronikschaltung.

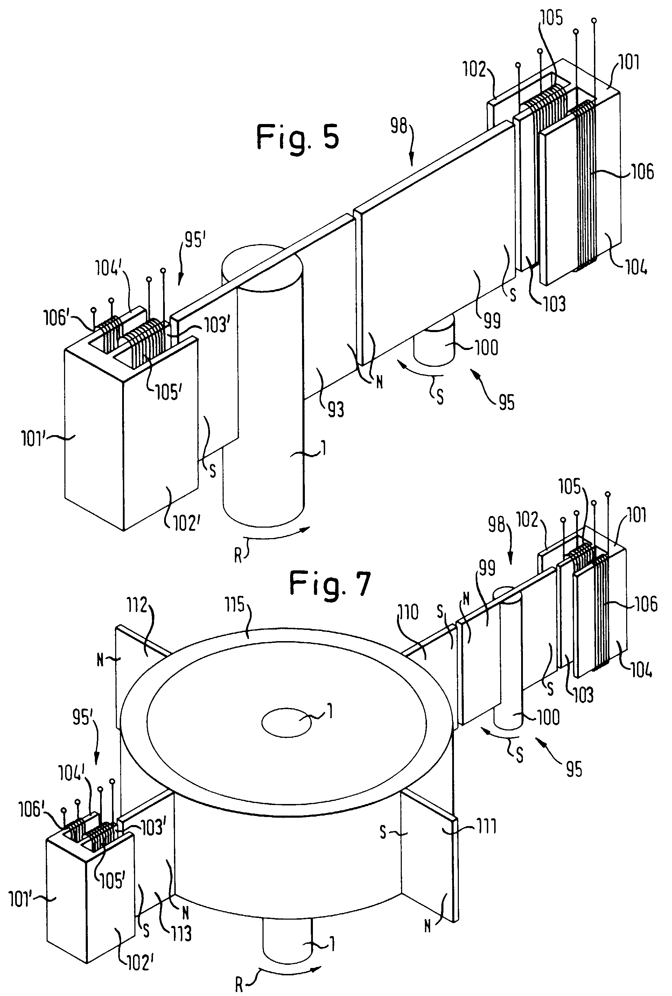

Der in Fig. 1 wiedergegebene kreiszylindrische Eisenkern 13 würde allerdings nur eine vergleichsweise schwache Magnetkoppelung zum Permanentmagneten 8 und damit nur eine geringe Induktionsflußänderung dφ/dt zur Folge haben. Vorzugsweise wird der Eisenkern daher E-förmig ausgebildet, wie dies weiter unten unter Bezugnahme auf Fig. 5 noch genauer beschrieben wird. Beim vorliegenden Ausführungsbeispiel wird ein E-förmiger Eisenkern so angeordnet, daß sich die drei E-Schenkel in der gleichen Weise in axialer Richtung erstrecken, wie dies für den zylinderförmigen Eisenkern 13 dargestellt ist.

Sobald die Induktionsspule 12 genügend elektrische Energie abgegeben hat, um die oben beschriebene Signalauswertung und Energiespeicherung durchzuführen, können ihre Ausgänge mit Hilfe eines nicht dargestellten steuerbaren Schalters kurzgeschlossen werden. Dadurch wird die Hin- und Herbewegung des Permanentmagneten 8 unter dem Eisenkern 13 hindurch so stark bedämpft, daß er schnell in die in Fig. 1 gezeigte Ausgangslage zurückkehrt. Es ist möglich, das aus der Blattfeder 4 und dem Permanentmagneten 8 bestehende System so stark zu bedämpfen, daß der Permanentmagnet 8 bei seiner Rückkehr aus der ersten Auslenkungsposition in die in Fig. 1 gezeigte Ausgangslage sich nur sehr wenig durch diese Ausgangslage hindurchbewegt und nach dem Zurückschwingen sehr schnell zur Ruhe kommt.

Anstelle des beschriebenen mit zwei Permanentmagneten 7, 8 arbeitenden Mitnehmers zur zeitweisen Koppelung des Energiespeichers 2 mit der Drehbewegung der Welle 1 kann prinzipiell auch ein rein mechanischer Mitnehmer vorgesehen werden, der dann, wenn der Träger 10 die in Fig. 1 gezeigte Stellung erreicht, mit der Blattfeder 4 im Bereich ihres freien Endes in Eingriff tritt und die Blattfeder 4 in der oben beschriebenen Weise über einen vorgebbaren Winkelbereich auslenkt, um sie dann schlagartig freizugeben. Da eine solche mechanische Koppeleinrichtung aber insbesondere dann, wenn die Welle 1 im Normalbetrieb mit hohen Drehzahlen läuft, einem starken Verschleiß unterworfen ist, ist die in Fig. 1 gezeigte magnetische Koppelung vorzuziehen.

Auch das in Fig. 2 gezeigte Ausführungsbeispiel eines erfindungsgemäßen Positionsgebers dient dazu, die Umdrehungen einer Welle 1 mit Sicherheit auch dann zu zählen, wenn sich diese Welle mit sehr geringer Geschwindigkeit dreht und die reguläre Energieversorgung der Auswerteelektronik ausgefallen bzw. abgeschaltet ist. Um überdies die Drehrichtung der Welle 1 erkennen zu können, sind hier zwei Energiespeicher- und Detektoreinheiten 15, 16 vorgesehen, die prinzipiell einen identischen Aufbau besitzen können. In Fig. 2 sind zwei unterschiedlich aufgebaute Einheiten 15, 16 wiedergegeben, um auf einfache Weise verschiedene Realisierungsmöglichkeiten darstellen zu können.

Beide Energiespeicher- und Detektoreinheiten 15, 16 umfassen ein Zwischenstück 18, 18', das jeweils einen Permanentmagneten 19, 19' aufweist, der um eine zur Achse der Welle 1 parallele Achse drehbar gelagert ist, wie dies durch die Wellen 20, 20' angedeutet ist. Die Wellen 20, 20' sind auf einem zur Drehachse der Welle 1 konzentrischen Kreisbogen mit einem Winkelabstand von etwa 90° angeordnet. Noch weiter außen und radial auf die Drehachse der Welle 1 ausgerichtet befinden sich zwei stabförmige Elemente 22, 22' aus ferromagnetischem Material, die hier von Weicheisenstäben gebildet werden. Diese Weicheisenstäbe 22, 22' sind drehfest so gelagert, daß sie mit ihren zur Achse der Welle 1 hinweisenden Stirnenden jeweils in geringem Abstand zu der Bewegungsbahn liegen, die die freien Enden der stabförmigen Permanentmagneten 19 bzw. 19' bei deren Drehung um die Wellen 20, 20' durchlaufen können. Dies hat zur Folge, daß die im Prinzip frei drehbaren stabförmigen Permanentmagneten 19, 19' vorzugsweise eine Ausgangsstellung einnehmen, in der sie radial zur Achse der Welle 1 hin ausgerichtet sind und sich aufgrund des von ihnen in den Weicheisenkernen 22, 22' induzierten Magnetfeldes an diesen Kernen "festhalten".

Die beiden Energiespeicher- und Detektoreinheiten 15, 16 sind so angeordnet, daß sich die nach innen weisenden Stirnflächen der in ihrer Ausgangslage befindlichen Permanentmagnete 19, 19' sehr nahe an einer kreisförmigen Bewegungsbahn befinden, die die freien Enden eines stabförmigen, drehfest mit der Welle 1 verbundenen weiteren Permanentmagneten 24 bei einer Drehung der Welle 1 durchlaufen.

Auf den Weicheisenkern 22 ist eine Induktionsspule 25 gewickelt. während der Weicheisenkern 22' keine solche Spule trägt. Die Welle 20', die drehfest mit dem Permanentmagneten 19' verbunden ist, ist in Fig. 2 nach oben verlängert und trägt einen gegen den Permanentmagneten 20' um 90° verdreht angeordneten, mit ihr ebenfalls drehfest verbundenen Permanentmagneten 26. Dieser Permanentmagnet 26 taucht von unten her in einen in Form eines hohlen Kreiszylinders ausgebildeten Doppel-E-Kern 28 ein, dessen Zylinderachse mit der Achse der Welle 20' zusammenfällt. Die in Fig. 2 oben liegende Seite des Kerns 28 ist durch einen Boden 30 verschlossen, in dem zwei längliche, zueinander parallele und zum Innenraum des Kerns 28 durchgehende Öffnungen 31, 32 vorgesehen sind, die zwischen sich einen Steg 33 einschließen. Auf diesen Steg 33 ist eine Induktionsspule 34 gewickelt. Jede der beiden Öffnungen 31, 32 mündet in einen den Boden radial nach außen durchsetzenden und sich dann längs einer Mantellinie über die gesamte axiale Höhe des Doppel-E-Kerns 28 erstreckenden Schlitz 35, 36. Auf diese Weise ist der Kern 28 praktisch in zwei durch einen Luftspalt voneinander getrennte Hälften geteilt, die nur über den die Induktionsspule 34 tragenden Steg 33 miteinander verbunden sind.

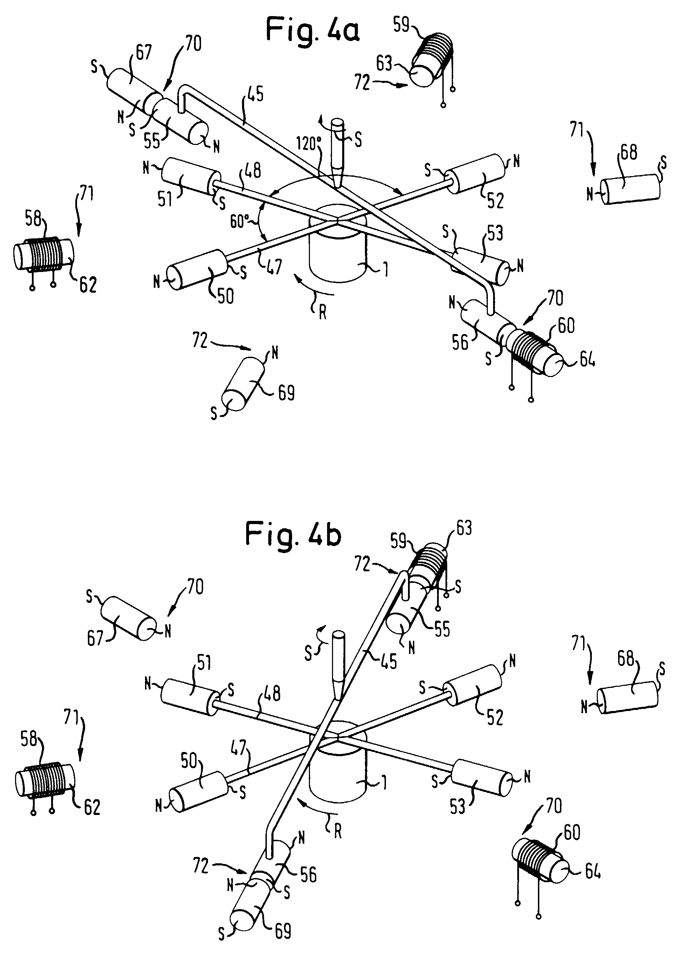

Bei der Energiespeicher- und Detektionseinheit 15 ist der Eisenkern 22 anders als dargestellt vorzugsweise E-förmig ausgebildet, wie dies in Zusammenhang mit Fig. 1 beschrieben wurde. Auch hier wird der E-förmige Kern so angeordnet, daß sich die freie Stirnfläche seines mittleren Schenkels möglichst nahe an der kreisförmigen Bewegungsbahn befindet, die die Stirnenden des Stabmagneten 19 bei dessen Rotation um die Welle 20 durchlaufen. Entsprechendes gilt auch für alle in den Fig. 3 und 4 gezeigten Weicheisenkerne, die lediglich der der Einfachheit halber als zylindrische Stäbe wiedergegeben sind.

Zur Erläuterung der Funktionsweise des in Fig. 2 gezeigten Umdrehungszählers wird zunächst die Einheit 15 betrachtet, wobei angenommen wird, daß der Stabmagnet 19 gegenüber der gezeigten Position um 180° gedreht ist, so daß sein Nordpol zur Achse der Welle 1 und sein Südpol zum Weicheisenkern 22 zeigt. Außerdem wird angenommen, daß der mit der Welle 1 drehfest verbundene Stabmagnet 24 bei einer Bewegung in Richtung des Pfeiles R noch nicht die in Fig. 2 gezeigte sondern eine etwas mehr als 90° davor befindliche Position erreicht hat, in der sich sein Nordpol in zunehmendem Maß dem Nordpol des Permanentmagneten 19 nähert. Letzterer bleibt zunächst trotz der zunehmenden abstoßenden Kräfte zwischen diesen beiden Polen in seiner mit dem Nordpol radial nach innen gerichteten Lage, weil sich sein Südpol am Eisenkern 22 "festhält". Der Energiespeicher zum Speichern potentieller Energie wird hier also von einem Magnetsystem gebildet, das zwei Elemente, nämlich den Weicheisenkern 22 und den Permanentmagneten 19 umfaßt. Auch die Mitnehmer-Anordnung ist wieder magnetischer Natur. Nähert sich nämlich der Nordpol des Permanentmagneten 24 immer stärker an den Nordpol des Permanentmagneten 19 an, so wird eine Winkelstellung der Welle 1 erreicht, in der die abstoßenden Kräfte zwischen diesen beiden Nordpolen größer werden, als die anziehenden Kräfte zwischen dem Permanentmagneten 19 und dem Weicheisenkern 22.

Zu diesem Zeitpunkt wird der Permanentmagnet 19 für eine Drehbewegung stark beschleunigt, wobei kurz nach Verlassen der radial ausgerichteten Ausgangslage nicht nur die abstoßenden Kräfte zwischen seinem Nordpol und dem Nordpol des Permanentmagneten 24 sondern auch die anziehenden Kräfte zwischen seinem Südpol und dem Nordpol des Permanentmagneten 24 wirksam werden. Aufgrund dieser doppelten Kraftwirkung hat der Permanentmagnet 19 eine sehr hohe Drehgeschwindigkeit erreicht, wenn er auf den Kern 22 der Induktionsspule 25 zu und an diesem vorbei läuft. Dadurch wird insbesondere dann, wenn dieser Kern in der oben beschriebenen Weise E-förmig ausgebildet ist, ein großes dφ/dt erzielt, wodurch eine entsprechend hohe Spannung in der Induktionsspule 25 induziert wird. Der damit verbundene elektische Energieimpuls kann in der gleichen Weise verwendet werden, wie dies oben unter Bezugnahme auf das in Fig. 1 gezeigte Ausführungsbeispiel beschrieben wurde.

Wenn die erforderliche Energie und das benötigte Signal an die Auswerteelektronik abgegeben wurden, wird die Induktionsspule 25 durch einen nicht dargestellten Schalter kurzgeschlossen und dadurch die Drehbewegung des Permanentmagneten 19 so stark bedämpft, daß er mit seinem Nordpol nur wenig an dem ihm zugewandten Stirnende des Kerns 22 vorbeiläuft um dann in die in Fig. 2 wiedergegebene Lage zurückzukehren.

Wesentlich ist auch hier, daß die beschriebene schnelle Drehbewegung von der Geschwindigkeit, mit der die Welle 1 und der mit ihr verbundene Permanentmagnet 24 auf die vorgebbare Winkelposition zuläuft, weitgehend unabhängig ist. Der hier realisierte magnetische Energiespeicher entnimmt über einen der Auslösestellung vorausgehenden Drehbewegungsbereich einen Teil der kinetischen Rotationsenergie der Welle 1 und speichert ihn kumulativ so lange, bis die beschriebene Drehbewegung des Permanentmagneten 19 ausgelöst wird. Dann wird die gespeicherte magnetische Energie in kinetische Energie umgesetzt, die beim Vorbeilaufen des Nordpol-Endes des Permanentmagneten 19 am Kern der Induktionsspule 25 in elektrische Energie umgeformt wird. Bei diesem Ausführungsbeispiel ist also der zum Speichern der magnetischen Energie dienende Permanentmagnet mit dem zur Umwandlung der dem Zwischenteil 18 aufgeprägten kinetischen Energie in einen elektrischen Energieimpuls dienenden Permanentmagneten identisch.

Dem eben beschriebenen Vorgang entspricht die Verwendung von umzumagnetisierenden Substanzen, bei denen dann, wenn ein sich bewegender Fremdmagnet eine vorgegebene Stellung erreicht hat, eine "schlagartige" Ummagnetisierung stattfindet. Hier wird die kumulierte potentielle Energie des Magnetfeldes in kinetische Energie der umklappenden Weißschen Bezirke umgesetzt. Das mechanisch-makroskopische Umklappen eines ganzen Permanentmagneten im Zwischenteil ist jedoch vorzuziehen, weil es nahezu verlustfrei, vollständig und beliebig oft durchführbar ist. Darüber hinaus weist es den Vorteil auf, daß durch die geringe Impedanz ein wesentlich längerer und energiereicherer Spannungsimpuls erhalten wird.

Dreht sich die Welle 1 über die in Fig. 2 gezeigte Position um weitere 90° in Richtung des Pfeiles R, so läuft der Südpol des Permanentmagneten 24 auf den jetzt radial nach innen weisenden Südpol des Permanentmagneten 19 zu und es erfolgt bei einer Fortsetzung dieser Drehbewegung der gleiche Energiespeicherungs- und Freisetzungsvorgang wie er eben beschrieben wurde. Der einzige Unterschied besteht darin, daß die in der Induktionsspule 25 induzierten Spannungsimpulse das umgekehrte Vorzeichen besitzen.

Allerdings ist nicht erkennbar, ob sich der Permanentmagnet 19 beim Vorbeilaufen am Kern 22 im Uhrzeigersinn oder entgegen dem Uhrzeigersinn dreht, was einer Drehung der Welle 1 entgegen dem Uhrzeigersinn bzw. im Uhrzeigersinn entsprechen würde. Um eine solche Richtungserkennung zu ermöglichen, ist eine gegen die eben beschriebene Einheit 15 um 90° versetzt angeordnete zweite Energiespeicher- und Detektoreinheit 16 vorgesehen. Der Winkel von 90° ist nicht zwingend sondern kann auch kleiner oder größer sein, so lange er nur deutlich größer als 0° und deutlich kleiner als 180° ist. Wie bereits erwähnt, kann die Einheit 16 in identischer Weise wie die Einheit 15 ausgebildet sein.

Bei der tatsächlich wiedergegebenen Ausführungsform hält sich der Permanentmagnet 19' bei der Annäherung des Nordpols des Permanentmagneten 24 an seinen Nordpol ebenfalls am drehfest gelagerten Eisenkern 22' fest. Erfolgt dann bei genügend großer Abstoßungskraft die oben beschriebene schlagartige Rotationsbeschleunigung, so bewegt sich der mit dem Permanentmagneten 19' über die Welle 20' gekoppelte Permanentmagnet 26 in dem ferromagnetischen topfförmigen Doppel-E-Kern 28 über einen vergleichsweise großen Winkelbereich mit hoher Beschleunigung, wobei seine beiden Pole über die Spalte 35 bzw. 36 hinweglaufen. In diesem Augenblick kehrt sich der in der Spule 34 induzierte Magnetfluß schlagartig um, so daß wieder ein großes dφ/dt erzielt wird. Bei dieser Ausführungsform sind also der Permanentmagnet 19', der im wesentlichen zur magnetischen Energiespeicherung dient und der Permanentmagnet 26, der im wesentlichen zur Umsetzung der kinetischen Rotationsenergie in elektrische Energie dient, voneinander verschieden, wenn auch mechanisch drehfest miteinander verbunden.

Aus der Reihenfolge und Polung, mit der die Spannungsimpulse nacheinander an den Ausgängen der Induktionsspulen 25 und 34 auftreten, läßt sich dann auch immer eindeutig die Richtung einer Drehbewegung erkennen, die eines der beiden Stirnenden des Permanentmagneten 24 an den beiden Energiespeicher- und Detektoreinheiten 15, 16 vorbeiführt. Auch ein Hin- und Herpendeln dieses Stirnendes zwischen den beiden Einheiten 15, 16 kann auf diese Weise erkannt werden. Nimmt man an, daß bei Inbetriebnahme der Anordnung einer oder beide der Permanentmagneten 19, 19' mit einem Magnetpol nach innen zur Welle 1 hinweisen, der dem Magnetpol des Permanentmagneten 24 entgegengesetzt ist, der sich zuerst an die betreffende Detektoreinheit 15 bzw. 16 annähert, so findet anders als oben beschrieben eine zunehmende Anziehung zwischen diesen beiden Polen statt. Dies wird dazu führen, daß sich der nach innen weisende Pol des Permanentmagneten 19 bzw. 19' beim Vorbeilaufen des entgegengesetzten Pols des Permanentmagneten 24 etwas mit diesem mitbewegt, wobei die Anziehungskraft mit zunehmendem Abstand wieder geringer wird. Der Permanentmagnet 19 bzw. 19' kehrt dann in seine ursprüngliche Lage zurück, ohne den oben beschriebenen Umklappvorgang zu durchlaufen und eine nennenswerte Spannung in der zugehörigen Induktionsspule 25 bzw.34 zu induzieren. Als nächstes nähert sich ihm dann aber bei gleichbleibender Drehrichtung der gleichnamige Magnetpol des Permanentmagneten 24, so daß nach wenigstens einer vollständigen Umdrehung der Welle 1 nach Inbetriebnahme die oben beschriebene Funktion für jede der Energiespeicher- und Detektoreinheiten 15, 16 gewährleistet ist.

In Fig. 3 ist ein erfindungsgemäßer Positionsgeber zur Überwachung einer Linearverschiebung wiedergegeben. Hier wird der sich bewegende Körper von einem Stab 40 gebildet, der sich in Richtung des Pfeiles S hin und her verschieben kann. Quer zur Verschiebungsrichtung trägt der Stab 40 eine Vielzahl von in regelmäßigen Abständen angeordneten Permanentmagneten 42, die zueinander antiparallel angeordnet sind, so daß sie mit alternierenden Nord- bzw. Südpol-Enden zu den beiden Energiespeicher- und Detektoreinheiten 15, 16 hinweisen, die in entsprechender Weise aufgebaut sind, wie dies oben unter Bezugnahme auf Fig. 2 für die Einheit 15 beschrieben wurde. Erfindungsgemäß können auch diese beiden Energiespeicher- und Detektoreinheiten in der gleichen Weise wie die in Verbindung mit Fig. 2 beschriebene Einheit 16 aufgebaut sein. Der Abstand der beiden Einheiten 15, 16 in Verschieberichtung beträgt hier eine viertel Periodenlänge, d.h. ein Viertel des Abstandes zwischen zwei aufeinanderfolgenden Nord- bzw. aufeinanderfolgenden Südpolen der Permanentmagneten 42. Die Funktionsweise entspricht völlig der des in Zusammenhang mit Fig. 2 beschriebenen Ausführungsbeispiels, so daß auf eine nochmalige Beschreibung verzichtet werden kann.

In den Fig. 4a und 4b ist ein weiteres Ausführungsbeispiel eines Umdrehungszählers in zwei unterschiedlichen Stellungen wiedergegeben, bei dem das Zwischenstück 45 um eine zur Achse der Welle 1 konzentrische Achse drehbar gelagert ist.

Wie man den Fig. 4a und 4b entnimmt, sind auf der Stirnfläche der sich drehenden Welle 1 zwei stabförmige Träger 47, 48 so angeordnet, daß sie sich in radialer Richtung bezüglich der Drehachse der Welle 1 erstrecken, wobei sie sich so überkreuzen, daß ihr Kreuzungspunkt in der Drehachse der Welle 1 liegt. Dabei schließen die Träger 47, 48 zwischen sich zwei einander gegenüberliegende Winkel von jeweils 60° und zwei einander gegenüberliegende Winkel von jeweils 120° ein. An ihren nach außen weisenden Enden tragen die Träger 47, 48 jeweils einen Permanentmagneten 50, 51, 52, 53, der mit seiner Nord-Süd-Richtung ebenfalls radial ausgerichtet ist. Die Permanentmagnete 50 bis 53 liegen auf einem zur Drehachse der Welle 1 konzentrischen Kreis und weisen alle mit dem gleichen Pol, in diesem Fall mit ihrem Nordpol nach außen.

Das in den Fig. 4a und 4b über der Stirnfläche der Welle 1 angeordnete Zwischenstück 45 ist drehbar gelagert, wobei seine Drehachse mit der der Welle 1 zusammenfällt.Es ist ebenfalls als stabförmiger Träger ausgebildet, der sich längs eines Kreisdurchmessers bezüglich der Drehachse der Welle 1 radial erstreckt und an seinen beiden nach unten abgewinkelten Enden jeweils einen mit seiner Nord-Süd-Richtung radial ausgerichteten Permanentmagneten 55, 56 tragt. Aufgrund der Abwinkelung der Enden des Zwischenstücks 45 können sich die Permanentmagneten 55, 56 bei einer Drehbewegung des Zwischenstücks 45 auf einem Kreis bewegen, der in der gleichen Ebene liegt wie der Bewegungskreis der Permanentmagnete 50 bis 53, aber einen um so viel größeren Durchmesser aufweist, daß die nach außen weisenden Stirnflächen der Permanentmagnete 50 bis 53 in geringem Abstand an den nach innen weisenden Stirnflächen der Permanentmagnete 55 und 56 vorbeilaufen können. Die Nord-Süd-Ausrichtung der Permanentmagnete 55, 56 ist der der Permanentmagnete 50 bis 53 entgegengesetzt, d.h. sie weisen im vorliegenden Fall mit ihren Nordpolen radial nach innen.

In der gleichen Ebene, in der die Bewegungsbahnen der Permanentmagnete 50 bis 53 und 55 bis 56 liegen, sind ebenfalls auf einem zur Drehachse der Welle 1 konzentrischen Kreis drei Induktionsspulen 58, 59 und 60 mit Winkelabständen von jeweils 120° fest so angeordnet, daß sich ihre hier als Kreiszylinder wiedergegebenen Kerne 62, 63, 64 in radialer Richtung bezüglich der Drehachse der Welle 1 erstrecken. In der gleichen Ebene und auf dem gleichen Kreis wie die Induktionsspulen 58 bis 60 sind drei Permanentmagnete 67, 68, 69 vorgesehen, die gegen die Induktionsspulen 58 bis 60 winkelmäßig jeweils um 60° versetzt angeordnet und so orientiert sind, daß ihre Nord-Süd-Richtung radial zur Drehachse der Welle 1 verläuft und ihre nach innen weisenden Pole den nach außen weisenden Polen der am Zwischenstück 45 befestigten Permanentmagnete 55, 56 entgegengesetzt sind. Der Durchmesser des Kreises, auf dem die Induktionsspulen 58 bis 60 und die Permanentmagnete 67 bis 69 fest angeordnet sind, ist so bemessen, daß die Permanentmagnete 55, 56 bei einer Drehbewegung des Zwischenteils 45 mit ihren nach außen weisenden Stirnflächen knapp an den nach innen weisenden Stirnflächen der Induktionsspulenkerne 62 bis 64 bzw. der Permanentmagnete 67 bis 69 vorbeilaufen können.

In Fig. 4a ist eine Stellung der eben beschriebenen Anordnung gezeigt, in der das Zwischenstück 45 eine vorübergehende Ruhelage einnimmt, da sich ihr Permanentmagnet 55 mit seinem nach außen weisenden Südpol an dem nach innen weisenden Nordpol des Permanentmagneten 67 "festhält". Entsprechendes gilt auch für die den gegenüberliegenden Permanentmagneten 56 des Zwischenteils 45, der, wenn auch mit geringerer Kraft, eine Anziehung durch den ferromagnetischen Kern 64 der Induktionsspule 60 erfährt. Somit umfassen hier die Energiespeicher 70, 71, 72, von denen in Fig. 4a nur der Energiespeicher 70 aktiv ist, jeweils vier Elemente, nämlich die beweglichen Permanentmagnete 55, 56 und ein Paar von einander diametral gegenüberliegenden ferromagnetischen Elementen, die von den Permanentmagneten 67, 68, 69 und dem jeweils zugehörigen Eisenkern 64, 62, 63 gebildet werden.

Aufgrund der in Richtung des Pfeiles R erfolgenden Drehung der Welle 1 nähert sich der Permanentmagnet 51 mit seinem nach außen weisenden Nordpol in zunehmenden Maße dem nach innen weisenden Nordpol des Permanentmagneten 55, während sich der Permanentmagnet 53 mit seinem nach außen weisenden Nordpol dem nach innen weisenden Nordpol des Permanentmagneten 56 nähert.

Auch dann, wenn die Drehbewegung der Welle 1 sehr langsam erfolgt, erreichen die Permanentmagnete 51, 53 irgendwann eine Stellung, in der die abstoßenden Kräfte zwischen ihnen und den Permanentmagneten 55, 56 so groß werden, daß sich letztere aus ihrer "Halterung" durch den Permanentmagneten 67 bzw. den Spulenkern 64 lösen und in Richtung des Pfeiles S schlagartig beschleunigt werden. Diese Beschleunigungswirkung wird zunächst noch dadurch verstärkt, daß der Permanentmagnet 56 mit seinem nach außen weisenden Südpol auf den nach innen weisenden Nordpol des feststehenden Permanentmagneten 69 zuläuft und von diesem angezogen wird. Ähnliches gilt auch für den Permanentmagneten 55, der bei zunehmender Annäherung beginnt, im ferromagnetischen Kern 63 der Spule 59 ein ihn anziehendes Magnetfeld zu induzieren. Die Geschwindigkeit des sich aufgrund der eben beschriebenen Beschleunigung drehenden Zwischenteils 45 erreicht ihr Maximum, wenn sich der Permanentmagnet 55 am Kern 63 der Induktionsspule 59 vorbeibewegt und in dieser die gewünschten Spannungsimpulse induziert. Wegen der hohen Drehgeschwindigkeit laufen die Permanentmagnete 55 und 56 an dem Spulenkern 63 bzw. dem Permanentmagneten 69 vorbei und nähern sich mit ihren nach innen weisenden Nordpolen an die nach außen weisenden Nordpole der Permanentmagnete 52, 50 an, die sich aufgrund der wesentlich langsameren Drehung der Welle 1 nur wenig auf ihrer Kreisbahn weiterbewegt haben. Aufgrund der bei zunehmender Annäherung immer stärker werdenden Abstoßungskräfte wird die Drehbewegung des Zwischenteils 45 abgebremst und die Permanentmagnete 55, 56 sind nicht in der Lage, an den Permanentmagneten 52, 50 vorbeizulaufen. Vielmehr kehrt sich ihre Drehbewegung um und sie kehren zu der in Fig. 4b gezeigten Stellung zurück, um die sie je nachdem, wie stark ihre Bewegung bedämpft wird, noch etwas pendeln.

Die eben beschriebenen Vorgänge wiederholen sich, wenn sich die Welle 1 in Richtung des Pfeiles R weiterdreht, so daß sich nach einer gewissen Zeit die Permanentmagnete 51, 53 wieder an die Permanentmagnete 55, 56 annähern. In diesem Fall wird dann der Energiespeicher 72 wirksam. Kehrt sich die Drehrichtung der Welle 1 um, so nähern sich stattdessen die Permanentmagnete 52, 50 an die Permanentmagnete 55, 56 an und der oben beschriebene Ablauf erfolgt in gleicher Weise jedoch mit entgegengesetzter Drehrichtung.

Aus der Reihenfolge, in der die Induktionsspulen 58 bis 60 Signale abgeben, kann wieder die Drehrichtung der Welle 1 bzw. die Tatsache erkannt werden, daß sich diese Drehrichtung innerhalb kurzer Zeit umkehrt, ohne daß eine vollständige Umdrehung erfolgt.

Bei dieser Anordnung kann dann, wenn die Energieversorgung der Auswerteelektronik sichergestellt ist und die Welle 1 sich schnell und rückwirkungsfrei drehen soll, der Träger 45 in axialer Richtung so weit nach oben gezogen werden, daß die Permanentmagnete 55, 56 durch die Permanentmagnete 50 bis 53 keine merkliche Beeinflussung mehr erfahren. Dadurch werden die Energiespeicher 70, 71, 72 von der Welle 1 so entkoppelt, daß sie ihrer kinetischen Energie keine Anteile mehr entziehen und speichern können.

Auch bei dem in Fig. 5 gezeigten Ausführungsbeispiel ist mit der Welle 1 ein Permanentmagnet 93 drehfest verbunden und so orientiert, daß seine Magnetpole radial nach außen weisen. Weiterhin ist eine im folgenden auch als Energieumformer bezeichnete Sensor- und Detektoreinheit 95 vorgesehen, die ein Zwischenstück 98 mit einem Permanentmagneten 99 aufweist, der mit einer Welle 100 drehfest verbunden ist, die um eine zur Achse der Welle 1 parallele Achse drehbar ist.

Auch der Permanentmagnet 99 ist so ausgerichtet, daß die seine Pole verbindende Achse bezüglich der Welle 100 radial verläuft. Der Abstand der Wellen 1 und 100 sowie die radialen Längen der Magneten 93 uns 99 sind so bemessen, daß sich die Magneten 93 und 99 mit ihren radialen Stirnflächen knapp aneinander vorbeibewegen können.

Auf dem von der Achse der Welle 1 ausgehenden Radius, auf dem die Achse der Welle 100 liegt, ist noch weiter außen ein E-förmiger Wecheisenkern 101 so angeordnet, daß seine drei E-Schenkel 102, 103, 104 nach innen zur Welle 1 hin, vorzugsweise zueinander parallel orientiert sind, wobei der mittlere Schenkel 103 genau auf dem oben erwähnten Radius liegt, während die beiden äußeren Schenkel 102 und 104 in Drehrichtung der Welle 100 gesehen um einige Bogengrade vor bzw. hinter dem mittleren Schenkel 102 liegen. Der Abstand des E-Kerns 101 von der Welle 100 ist so gewählt, daß sich die Pol-Stirnflächen des Permanentmagneten 99 bei dessen Drehung um die Achse der Welle 100 in geringem Abstand an der radial nach innen weisenden Stirnfläche des mittleren Schenkels 103 vorbeibewegen können. Zu den äußeren Schenkeln muß ein größerer Abstand eingehalten werden, damit der im Prinzip frei drehbare Permanentmagnet 99 vorzugsweise eine Ausgangsstellung einnimmt, in der er radial zur Achse der Welle 1 hin ausgerichtet ist und sich aufgrund des von ihm im Weicheisenkernen 101 induzierten Magnetfeldes an diesem "festhält".

Auf den mittleren Schenkel 103 des Weicheisenkerns 101 ist eine Induktionsspule 105 gewickelt, während der eine äußere Schenkel 104 eine Hilfsspule 106 trägt.

Ein weiterer Energieumformer 95' wird von einem E-förmigen Weicheisenkern 101' gebildet, der ebenfalls so angeordnet, ist daß seine Schenkel 102', 103', 104' nach innen zur Welle 1 hin orientiert sind, wie dies oben für den Kern 101 beschrieben wurde.

Zur Erläuterung der Funktionsweise wird zunächst der Energieumformer 95 betrachtet, wobei angenommen wird, daß der mit der Welle 1 drehfest verbundene Permanentmagnet 93 bei einer Bewegung in Richtung des Pfeiles R noch nicht die in Fig. 5 gezeigte sondern eine davor befindliche Position erreicht hat, in der sich sein Nordpol in zunehmendem Maß dem Nordpol des Permanentmagneten 99 nähert. Letzterer bleibt zunächst trotz der größer werdenden abstoßenden Kräfte zwischen diesen beiden Polen in seiner mit dem Nordpol radial nach innen gerichteten Lage, weil sich sein Südpol am Eisenkern 101 "festhält". Nähert sich der Nordpol des Permanentmagneten 93 weiter an den Nordpol des Permanentmagneten 99 an, so wird bereits vor Erreichen der in Fig. 5 gezeigten, tatsächlich nie als stabile Lage auftretenden Stellung eine Winkelstellung der Welle 1 erreicht, in der die abstoßenden Kräfte zwischen diesen beiden Nordpolen größer werden, als die anziehenden Kräfte zwischen dem Permanentmagneten 99 und dem Weicheisenkern 101.

Zu diesem Zeitpunkt wird der Permanentmagnet 99 für eine Drehbewegung in Richtung des Pfeiles S stark beschleunigt, wobei kurz nach Verlassen der radial ausgerichteten Ausgangslage nicht nur die abstoßenden Kräfte zwischen seinem Nordpol und dem Nordpol des Permanentmagneten 93 sondern auch die anziehenden Kräfte zwischen seinem Südpol und dem Nordpol des Permanentmagneten 93 wirksam werden. Aufgrund dieser doppelten Kraftwirkung hat der Permanentmagnet 99 eine sehr hohe Drehgeschwindigkeit erreicht, wenn er mit seinem Nordpol-Ende auf den Kern 101 der Induktionsspule 105 zu und an diesem vorbeiläuft.

Dies hat zur Folge, daß der vom Permanentmagneten 99 ausgehende Magnetfluß zunächst durch den außen liegenden E-Schenkel 102 in den Eisenkern 101 ein- und im wesentlichen durch den mittleren Schenkel 103 wieder austritt. Die dabei vorgegebene Magnetflußrichtung kehrt sich dann schlagartig um, wenn die dem Kern 101 zugewandte Stirnfläche des Permanentmagneten 99 den kurzen Bogen zwischen dem außen liegenden Schenkel 102 und dem mittleren Schenkel 103 durchlaufen hat. Hierdurch wird ein sehr großes dφ/dt erreicht, das beispielsweise einen positiven Spannungsimpuls an den Ausgängen der Induktionsspule 105 erzeugt. Durchläuft dann die Stirnfläche des Permanentmagneten 99 das weitere kleine Bogenstück zwischen dem mittleren Schenkel 103 und dem anderen außen liegenden E-Schenkel 104 des Kerns 101, so kehrt sich die Magnetflußrichtung im Eisenkern erneut um, so daß nunmehr ein nahezu gleich großer negativer Spannungsimpuls induziert wird.

Beim Vorbeilaufen der Stirnfläche des Permanentmagneten 99 am äußeren E-Schenkel 104 wird in der auf diesen Schenkel gewickelten Hilfsspule 106 ebenfalls ein Spannungsstoß induziert, der zumindest ausreicht, um für die Auswerteelektronik ein Signal zu liefern, aus dessen zeitlichem Auftreten vor oder nach dem Strom-Spannungs-Stoß in der Induktionsspule 105 die Drehrichtung des Permanentmagneten 99 und damit auch erkannt werden kann, in welcher Richtung sich die Welle 1 gedreht hat.

Auch ein Hin- und Herpendeln einer der Stirnseiten des Magneten 99 vor den Schenkeln des Kerns 101 kann auf diese Weise festgestellt werden.

Sobald die Induktionsspule 105 genügend elektrische Energie abgegeben hat, um eine Signalauswertung und Energiespeicherung durchzuführen, können ihre Ausgänge durch einen steuerbaren Schalter (nicht dargestellt) der Auswerteelektronik kurzgeschlossen oder vergleichsweise niederohmig miteinander verbunden werden. Dadurch wird die ansonsten längere Zeit andauernde Drehbewegung des Permanentmagneten 99 so stark bedämpft, daß er mit seinem Nordpol nur wenig an der ihm zugewandten Stirnseite des Kerns 101 vorbeiläuft um dann in eine Lage zurückzukehren, die gegen die in Fig. 5 wiedergegebene Lage um 180° gedreht ist.

Die beschriebene schnelle Drehbewegung des Permanentmagneten 99 ist wiederum von der Geschwindigkeit, mit der die Welle 1 und der mit ihr verbundene Permanentmagnet 93 auf die vorgebbare Winkelposition zulaufen, insofern weitgehend unabhängig, als sie einen Mindestwert nicht unterschreitet. Es ist also auch hier ein Energieumformer realisiert, der bei extrem langsamen Drehbewegungen der Welle 1 einen Teil ihrer kinetischen Energie entnimmt und in einen Strom-Spannungs-Stoß vergleichsweise hoher Leistung umformt, der der Auswerteelektronik nicht nur ein Signal zum Zählen der Wellenumdrehungen sondern auch einen elektrischen Energievorrat liefert, der ihren Betrieb für eine gewisse Zeitspanne sicherstellt.

Dreht sich die Welle 1 über die in Fig. 5 gezeigte Position um weitere 180° in Richtung des Pfeiles R, so läuft der Südpol des Permanentmagneten 93 auf den jetzt radial nach innen weisenden Südpol des Permanentmagneten 99 zu und es erfolgt bei einer Fortsetzung dieser Drehbewegung der gleiche Energieumwandlungsvorgang, wie er eben beschrieben wurde. Der einzige Unterschied besteht darin, daß die in den Induktionsspulen 105 und 106 induzierten Spannungsimpulse umgekehrte Vorzeichen besitzen.

Bei dem Energieumformer 95' fehlt das Zwischenteil 98. Daher werden in den auf den E-Kern 101' gewickelten Spulen 105' und 16' bei sehr langsamen Drehungen der Welle 1 nur schwache Strom-Spannungs-Stöße induziert, die im allgmeinen nicht als Energielieferanten für die Auswerteelektronik geeignet sind.

Etwas anderes gilt aber dann, wenn sich die Welle 1 sehr schnell dreht. In diesem Fall ist es möglich, daß der Permanentmagnet 99 des Zwischenstücks 98 der Bewegung der Welle nicht mehr zu folgen vermag und unter Umständen nahezu stehen bleibt. Dann läuft aber der Permanentmagnet 93 mit so großer Geschwindigkeit am Weicheisenkern 101' vorbei, daß in den Spulen 105', 106' ein ausreichend großes dφ/dt erzeugt wird und die von diesen Spulen abgegebenen Strom-Spannungs-Stöße mit den oben für die Spulen 105 und 106 beschriebenen vergleichbar sind und ebenso wie diese verwendet werden können.

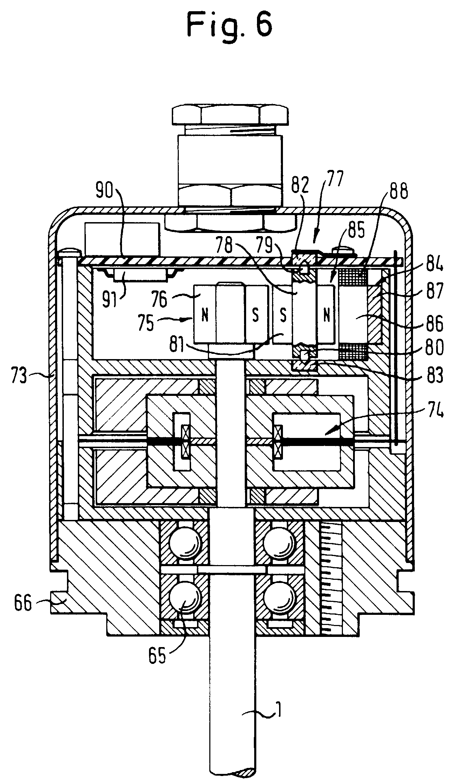

In Fig. 6 ist ein konkretes Ausführungsbeispiel eines erfindungsgemäßen Umdrehungszählers wiedergegeben. Auf dem freien Ende einer sich drehenden Welle 1 ist vermittels einer Lageranordnung 65 eine Basis 66 montiert, die die Drehbewegung der Welle 1 nicht mitmacht. Der Basis 66 trägt ein topfförmiges Gehäuse 73, das das freie Ende der Welle 1 umschließt. Im Gehäuse 73 ist ein hochauflösender Drehgeber 74 untergebracht, wie er beispielsweise in der deutschen Patentschrift 41 13 745 beschrieben ist. Im oberen Bereich des Gehäuses 37 befindet sich der erfindungsgemäße Positionsdetektor 75, der im Prinzip entsprechend dem in Fig. 2 wiedergegebenen Ausführungsbeispiel aufgebaut ist. Der wesentliche Unterschied besteht darin, daß zur Erzielung eines großen dφ/dt das Massenträgheitsmoment möglichst klein gehalten ist, um hohe Drehbeschleunigungen und damit große Rotationsgeschwindigkeiten erzielen zu können.

Wie man der Fig. 6 entnimmt, ist die Welle 1 an ihrem nach oben weisenden freien Ende längs eines durch ihre Drehachse gehenden Durchmessers geschlitzt und in diesen Schlitz ist von oben her ein plättchenförmiger Permanentmagnet 76 eingesteckt, dessen Nord-Süd-Richtung radial verläuft.

Das Zwischenstück 77 umfaßt eine parallel zur Welle 1 in geringem Abstand exzentrisch angeordnete Welle 78, die mit einem durchgehenden Schlitz zur Aufnahme eines plättchenförmigen Permanentmagneten 81 versehen ist, der senkrecht zur Zeichenebene der Fig. 6 eine geringe Dicke aufweist und mit seiner Nord-Süd-Richtung ebenfalls radial orientiert ist. An ihren Enden weist die Welle 78 jeweils einen eingepreßten Stahlstift 79, 80 auf, über den sie in einem Rubin 82 bzw. 83 gelagert ist. In Fig. 6 rechts neben dem Nordpol des Permanentmagneten 81 sind der mittlere Schenkel 86 und der geschnittene Steg 87 eines E-förmigen Kerns 84 zu sehen, auf dessen mittleren Schenkel 86 eine Induktionsspule 88 gewickelt ist. Der Energiespeicher 85 wird hier vom Permanentmagneten 81 und dem Kern 84 gebildet und die Funktionsweise dieser Anordnung entspricht völlig der, wie sie unter Bezugnahme auf Fig. 2 beschrieben wurde. Da bei dem in Fig. 6 gezeigten System ebenfalls die Drehrichtung der Welle 1 mit nur einer Energiespeicher- und Detektoreinheit nicht erkannt werden kann, ist eine zweite, im wiedergegebenen Schnitt allerdings nicht sichtbare Einheit oder eine Hilfsspule vorgesehen, wie sie anhand Fig. 5 beschrieben wurde.

Über dem freien Stirnende der Welle 1 befindet sich eine gedruckte Schaltungsplatine 90, auf der die Auswerteelektronik 91 untergebracht ist, die durch die erfindungsgemäße Vorrichtung mit Signalimpulsen und elektrischer Betriebsenergie versorgt wird. Wenn sich die Welle 1 mit hoher Geschwindigkeit dreht, wird das die Welle 78 und den Permamentmagneten 81 umfassende Zwischenstück 77 in seiner Drehbewegung durch Kurzschließen der Induktionsspule 88 je nach Drehzahl der Welle 1 definiert oder gar nicht bedämpft. Da es sich mit sehr hoher Geschwindigkeit drehen kann, synchronisiert es sich durch entsprechende Bedämpfung mit der Drehung der Welle 1 und kann prinzipiell auch dazu verwendet werden, die Auswerteelektronik 91 als einzige Energiequelle mit elektrischer Energie zu versorgen.

Anstelle der gezeigten Stahl-Rubin-Lager können für die Welle 78 auch Kugel- oder andere Lager vorgesehen werden.

Die in Fig. 7 gezeigte Ausführungsform entspricht weitgehend derjenigen aus Fig. 5, so daß auf eine Beschreibung der identisch vorhandenen Teile, die auch die gleichen Bezugszeichen tragen, verzichtet werden kann.

Der wesentliche Unterschied besteht darin, daß die sich drehende Welle 1, deren Bewegung überwacht werden soll, nicht einen sondern vier plättchenförmige Permanentmagneten 110, 111, 112 und 113 trägt, die einander paarweise diametral gegenüber so angeordnet sind, daß ihre Nord/Süd-Richtungen ebenso radial verlaufen, wie dies oben für den Permanentmagneten 3 aus Fig. 5 beschrieben wurde. Dabei ist die Anordnung so getroffen, daß von den einander gegenüberliegenden Permanentmagneten 110 und 113 die Südpole radial außen liegen, während bei den einander ebenfalls gegenüberliegenden, aber gegen das erste Paar von Permanentmagneten um 90° verdreht angeordneten Permanentmagneten 111 und 112 die Nordpole nach außen weisen. Wie man der Figur entnimmt, sind die Permanentmagneten 110 bis 113 auf der Welle 1 nicht unmittelbar sondern über einen ferromagnetischen Ring 115 montiert, der für einen Feldlinienschluß sorgt.

Die Wirkungsweise ist im Prinzip die gleiche, wie sie unter Bezugnahme auf Fig. 5 beschrieben wurde, nur daß hier an den Energieumformern 95 bzw. 95' ein Strom/Spannungs-Impuls nach jeder Winkeldrehung um 90° erzeugt wird. Bei einer vollen Umdrehung der Welle 1 erhält man also nicht nur zwei sondern vier um jeweils 90° voneinander beabstandete Signal-Energie-Impulse. Dabei dient der Energieumformer 95 mit dem beweglichen Zwischenteil 98 wieder zur Signal-Energie-Erzeugung für den Fall, daß sich die Welle 1 nur sehr langsam dreht, so daß das im Energieumformer 95' erzeugte dφ/dt nicht ausreichend ist. Bei hohen Drehgeschwindigkeiten können dann zumindest die Signalimpulse vom Energieumformer 95' gewonnen werden.

Die Stellung des drehbaren Permanentmagneten 99 ist in Fig. 7 gerade entgegengesetzt zu der in Fig. 5. D.h., es ist hier eine Situation wiedergegeben, wie sie eintritt, nachdem der sich an den Energieumformer 95 annähernde Permanentmagnet 110 mit seinem Südpol den zunächst radial nach innen weisenden Südpol des Permanentmagneten 99 abgestoßen und diesen zu einer zunächst stark beschleunigten Drehung in Richtung des Pfeiles S veranlaßt hat. Hierdurch werden, wie oben ausführlich beschrieben, mit Hilfe des E-Kerns 101 und der auf ihn gewickelten Spulen 105 und 106 die gewünschten Strom/Spannungs-Stöße induziert. Der sich nach einer Drehung von 180° an den Südpol des Magneten 110 annähernde Nordpol des Magneten 99 wird dabei von diesem Südpol angezogen, hat aber aufgrund seiner hohen Drehgeschwindigkeit die Tendenz, an diesem vorbeizulaufen. Um ein unkontrolliertes Drehen des Permanentmagneten 98 zu verhindern, ist es möglich, die Wicklung 105 mit Hilfe eines nicht dargestellten Schalters kurzzuschließen, wodurch die Drehbewegung des Permanentmagneten 99 so gedämpft wird, daß er nach einem kurzen Überschwingen seines Nordpols am Südpol des Permanentmagneten 110 vorbei, in die in der Fig. 7 gezeigte Lage zurückkehrt. Dreht sich dann die Welle 1 in Richtunq des Pfeiles R oder entgegengesetzt um etwa 90°, so nähert sich der Nordpol entweder des Permanentmagneten 111 oder des Permanentmagneten 112 an den Nordpol des Magneten 99 an und veranlaßt diesen wieder zu einer schnellen, die gewünschen Strom/Spannungs-Stöße induzierenden Drehbewegung.

Will man eine noch höhere Auflösung des Vollkreises von 360° erreichen, so können entweder mehr als die gezeigten vier Permanentmagnete 110 bis 113 an der Welle 1 angebracht werden. Alternativ hierzu ist es möglich, zwei oder mehr weitere Energieumformer vorzusehen, die gegen die Energieumformer 95, 95' um von 90° verschiedene Winkel versetzt angeordnet werden.

Es wurde mehrfach darauf hingewiesen, daß es häufig zweckmäßig ist, die angestoßene und zunächst beschleunigte Drehbewegung der Permanentmagnete der Zwischenstücke 18, 18', 45, 77 bzw. 98 zu bedämpfen, sodaß sehr schnell eine neue Ausgangsstellung erreicht wird, die gegen die zuvor eingenommenen Ausgangsstellung beispielsweise um 180° verdreht ist und aus der heraus der Permanentmagnet des Zwischenstücks durch einen entgegengesetzten Pol des oder der sich mit der Welle 1 drehhenden Magneten für eine erneute, beschleunugte Drehung angestoßen werden kann. Diese Dämpfung kann nicht nur durch das erwähnte und bevorzugte Kurzschließen der zugehörigen Induktionsspule sondern auch auf andere Art, beispielsweise auf mechanischem Weg erfolgen.

## Patentansprüche

1. Positionsdetektor, mit dessen Hilfe immer dann ein elektrischer Impuls erzeugt und einer Verarbeitungselektronik zugeführt wird, wenn ein sich bewegender Körper eine vorgebbare Position erreicht, dadurch **gekennzeichnet,** daß ein Energiespeicher (2; 15, 16; 70, 71, 72; 85) vorhanden ist, der bei Annäherung des Körpers (1; 40) an die vorgebbare Position einen Teil der Bewegungsenergie des Körpers (1; 40) in Form potentieller Energie ansammelt und speichert und beim Erreichen der Position die gespeicherte potentielle Energie in Form kinetischer Energie schlagartig freisetzt, und daß eine Vorrichtung (8, 12, 13; 19, 22, 25, 19', 26, 34; 55, 56, 58, 59, 60, 62, 63, 64; 81, 84, 88) zum Umformen dieser kinetischen Energie in einen elektrischen Energieimpuls vorhanden ist, der der Verarbeitungselektronik (91) zugeführt wird.

2. Positionsdetektor nach Anspruch 1, dadurch **gekennzeichnet,** daß der Energiespeicher (15, 16; 70, 71, 72, 85) ein bezüglich des sich bewegenden Körpers (1; 40) bewegliches Zwischenteil (18, 18'; 45, 77) umfaßt, das beim schlagartigen Freisetzen der potentiellen Energie eine hohe Beschleunigung erfährt.

3. Positionsdetektor nach Anspruch 2, dadurch **gekennzeichnet,** daß das Zwischenteil (18, 18'; 45; 77) eine sehr kleine Masseträgheit besitzt.

4. Positionsdetektor nach Anspruch 2 oder 3, dadurch **gekennzeichnet,** daß eine Einrichtung vorgesehen ist, die das Zwischenteil (18, 18'; 45; 77) stark abbremst, wenn der Verarbeitungselektronik (91) die gewünschte Spannung und Ladung zugeführt worden ist.

5. Positionsdetektor nach einem der Ansprüche 1 bis 4, dadurch **gekennzeichnet,** daß ein mechanischer Mitnehmer vorgesehen ist, der das Zwischenteil zumindest für einen Teil der Bewegungsbahn des sich bewegenden Körpers mit dessen Bewegung koppelt, wenn aufgrund eines Versagens des Energiespeichers keine Beschleunigung des Zwischenteils durch Freisetzen potentieller Energie erfolgt.

6. Positionsdetektor nach einem der Ansprüche 2 bis 5, dadurch **gekennzeichnet,** daß das Zwischenteil (18, 18'; 45; 77) um eine Achse drehbar gelagert ist.

7. Positionsdetektor nach einem der Ansprüche 1 bis 6, dadurch **gekennzeichnet,** daß dann, wenn die Betriebsspannung der Verarbeitungselektronik mit Hilfe von Fremdenergie aufrechterhalten werden kann, der Energiespeicher von der Bewegung des einen Körpers so entkoppelbar ist, daß er von dessen Bewegungsenergie keine Anteile mehr ansammelt und speichert.

8. Positionsdetektor nach einem der Ansprüche 1 bis 7, dadurch **gekennzeichnet,** daß der Energiespeicher (2) zur Speicherung potentieller Energie eine Federanordnung (4) umfaßt, die bei Annäherung des einen Körpers (1) an die vorgebbare Position in zunehmendem Maße gespannt und bei Erreichen der Position so entspannt wird, daß zumindest ein Teil von ihr schlagartig beschleunigt wird.

9. Positionsdetektor nach einem der Ansprüche 1 bis 7, dadurch **gekennzeichnet,** daß der Energiespeicher (15, 16; 70, 71, 72; 85) zur Speicherung potentieller Energie eine Magnetanordnung mit wenigstens zwei Elementen (19, 22, 19', 22'; 55, 56, 62, 63, 64, 67, 68, 69; 81, 84) umfaßt, von denen das eine von einem Permanentmagneten (19, 19', 55, 56; 81) gebildet wird und das andere (22, 22'; 62, 63, 64, 67, 68, 69; 84) aus einem ferromagnetischen Material besteht.

10. Positionsdetektor nach Anspruch 9, dadurch **gekennzeichnet,** daß auch das aus ferromagnetischem Material bestehende Element (67, 68, 69) ein Permanentmagnet ist.

11. Positionsdetektor nach einem der vorhergehenden Ansprüche, dadurch **gekennzeichnet,** daß die Vorrichtung zum Umformen der kinetischen Energie in einen elektrischen Energieimpuls einen Permanentmagneten (8; 19, 26; 55, 56; 81) umfaßt, der beim Freisetzen der gespeicherten potentiellen Energie schlagartig beschleunigt wird und sich dann mit hoher Geschwindigkeit relativ zu einer Induktionsspule (12; 25, 34; 58, 59, 60; 88) bewegt.

12. Positionsdetektor nach Anspruch 11, dadurch **gekennzeichnet,** daß die Induktionsspule (88) auf einen E-förmigen Kern (84) gewickelt ist, an dessen drei Armen sich der Permanentmagnet (81) nacheinander vorbei bewegt.

13. Positionsdetektor nach einem der Ansprüche 2 bis 10 in Verbindung mit Anspruch 11 oder 12, dadurch **gekennzeichnet,** daß der Permanentmagnet (19, 19', 55, 56; 81) mit dem Zwischenteil (18, 18'; 45; 77) fest verbunden ist.

14. Positionsdetektor nach Anspruch 6 und 13, dadurch **gekennzeichnet,** daß das Zwischenteil (18') eine Welle (20') und zwei Permanentmagnete (19', 26) umfaßt, die in axialer Richtung der Welle (20') voneinander im Abstand angeordnet und mit der Welle (20') drehfest verbunden sind, und von denen der eine (19') im wesentlichen zum Energiespeicher und der andere (26) im wesentlichen zur Vorrichtung zum Umformen der kinetischen Energie in einen elektrischen Energieimpuls gehört.

15. Positionsdetektor nach Anspruch 14, dadurch **gekennzeichnet,** daß die Induktionsspule (34) auf einen topfförmigen Doppel-E-Kern (28) gewickelt ist, in dessen Inneren sich der eine Permanentmagnet (26) nach der schlagartigen Beschleunigung des Zwischenteils (18') dreht.

16. Positionsdetektor nach einem der Ansprüche 10 bis 13, dadurch **gekennzeichnet,** daß der Permanentmagnet (19; 55, 56; 81) der Vorrichtung zum Umformen der kinetischen Energie in einen elektrischen Energieimpuls mit dem Permanentmagneten des Energiespeichers identisch ist.

17. Positionsdetektor nach einem der vorhergehenden Ansprüche, dadurch **gekennzeichnet,** daß der elektrische Energieimpuls der Verarbeitungselektronik (91) als Signalimpuls zugeführt wird.

18. Positionsdetektor nach einem der vorhergehenden Ansprüche, dadurch **gekennzeichnet,** daß die Verarbeitungselektronik (91) einen Speicher für elektrische Energie umfaßt, der zumindest zeitweise ihre Betriebsspannung liefert, und daß ein Teil des elektrischen Energieimpulses zum Laden dieses Speichers dient.

19. Positionsdetektor nach einem der vorhergehenden Ansprüche, dadurch **gekennzeichnet,** daß der Positionsdetektor ein Umdrehungszähler ist, wobei der sich bewegende Körper von einer sich drehenden Welle (1) gebildet wird.

20. Positionsdetektor nach den Ansprüchen 6 und 19, dadurch **gekennzeichnet,** daß die Achse des Zwischenteils (45) zur Achse der Welle (1) konzentrisch ist.

21. Positionsdetektor nach den Ansprüchen 6 und 19, dadurch **gekennzeichnet,** daß die Achse des Zwischenteils (18, 18'; 77) zur Achse der Welle (1) parallel verläuft, mit ihr aber nicht zusammenfällt.

22. Positionsdetektor nach den Ansprüchen 6 und 19, dadurch **gekennzeichnet,** daß die Achse des Zwischenteils zur Achse der Welle in etwa senkrecht verläuft.

23. Positionsdetektor nach einem der vorhergehenden Ansprüche, dadurch **gekennzeichnet,** daß die der Verarbeitungselektronik (91) zugeführten elektrischen Energieimpulse die einzige Energiequelle der Verarbeitungselektronik (91) bilden.

24. Positionsdetektor nach einem der Ansprüche 18 bi3 23, dadurch **gekennzeichnet,** daß der Positionsdetektor (75) nur zur Erzeugung und Zuführung von elektrischer Versorgungsenergie für die Verarbeitungselektronik (91) sowie zur Gewinnung von Information über die Bewegungsrichtung Verwendung findet, und daß für eine eventuelle Positionsbestimmung ein zusätzlicher Sensor vorgesehen ist.

25. Positionsdetektor nach einem der Ansprüche 2 bis 24, dadurch **gekennzeichnet,** daß eine von einer Federanordnung gebildete Rückstellvorrichtung vorgesehen ist, die das Zwischenteil nach jeder Auslenkung in eine definierte Ausgangslage zurückbringt.

26. Positionsdetektor nach einem der Ansprüche 12 bis 25, dadurch **gekennzeichnet,** daß die zur Erzeugung von Signal/Energie-Impulsen dienende Spule (105) auf den mittleren der drei Schenkel (102, 103, 104) des E-förmigen Kerns gewickelt ist, und daß auf wenigstens einen (104) der äußeren Schenkel eine Hilfsspule (106) gewickelt ist, deren Signale zur Richtungserkennung der zu überwachenden Bewegung dienen.

27. Positionsdetektor nach einem der Ansprüche 18 bis 26, dadurch **gekennzeichnet,** daß der Speicher für elektrische Energie von einer Kondensatoranordnung gebildet wird.

## Claims

1. A position detector by means of which an electrical pulse is generated and fed to an electronic processing means whenever a moving body reaches a predeterminable position, characterized in that there is provided an energy storage means (2; 15, 16; 70, 71; 72; 85) which, when the body (1; 40) approaches the predeterminable position, accumulates a part of the kinetic energy of the body (1; 40) in the form of potential energy and stores same and, when said position is reached, abruptly liberates the stored potential energy in the form of kinetic energy, and in that there is provided a means (8, 12, 13; 19, 22, 25, 19', 26, 34; 55, 56, 58, 59, 60, 62, 63, 64; 81, 84, 88) for converting said kinetic energy into an electrical energy pulse which is fed to the electronic processing means (91).

2. A position detector as set forth in claim 1, characterized in that the energy storage means (15, 16; 70, 71, 72, 85) includes an intermediate portion (18, 18'; 45, 77) which is movable relative to the moving body (1; 40) and which experiences a high level of acceleration when the potential energy is suddenly liberated.

3. A position detector as set forth in claim 1, characterized in that the intermediate portion (18, 18'; 45; 77) has a very small moment of inertia.

4. A position detector as set forth in claim 2 or 3, characterized in that there is provided a means for strongly decelerating the intermediate portion (18, 18'; 45, 77) when the desired voltage and charge have been fed to the electronic processing menas (91).

5. A position detector as set forth in any of claims 1 to 4, characterized in that there is provided a mechanical entrainment means coupling the intermediate portion to the movement of said moving body, at least for a part of the path of movement of the moving body, if due to a failure of the energy storage means, no acceleration is imparted to the intermediate portion by the liberation of potential energy.

6. A position detector as set forth in any of claims 2 to 5, characterized in that the intermediate portion (18, 18'; 45, 77) is supported rotatably about an axis.

7. A position detector as set forth in any of claims 1 to 6, characterized in that, when the operating voltage of the electronic processing means can be maintained by means of outside energy, the energy storage means can be decoupled from the movement of the moving body in such a way that it no longer accumulates and stores a portion of the kinetic energy thereof.

8. A position detector as set forth in any of claims 1 to 7, characterized in that the energy storage means (2) for the storage of potential energy includes a spring means (4) which is increasingly stressed when the body (1) approaches said predeterminable position and relieved of stress when said position is reached so that at least a part of said spring means is abruptly accelerated.

9. A position detector as set forth in any of claims 1 to 7, characterized in that the energy storage means (15, 16; 70, 71, 72; 85) for the storage of potential energy includes a magnet means having at least two elements (19, 22, 19', 22'; 55, 56, 62, 63, 64, 67, 68, 69; 81, 84), of which one is formed by a permanent magnet (19, 19', 55, 56; 81) and the other (22, 22'; 62, 63, 64, 67, 68, 69; 84) comprises ferromagnetic material.

10. A position detector as set forth in claim 9, characterized in that the element (67, 68, 69) which comprises ferromagnetic material is also a permanent magnet.

11. A position detector as set forth in any preceding claim, characterized in that the means for converting the kinetic energy into an electrical energy pulse includes a permanent magnet (8; 19, 26; 55, 56; 81) which, when said stored potential energy is liberated, is abruptly accelerated and then moves with a high speed relative to an induction coil (12; 25, 34; 58, 59, 60; 88).

12. A position detector as set forth in claim 11, characterized in that the induction coil (88) is wound on an E-shaped core (84) having three arms past which the permanent magnet (81) successively moves.

13. A position detector as set forth in any of claims 2 to 10 in combination with one of claims 11 or 12, characterized in that the permanent magnet (19, 19', 55, 56; 81) is fixedly connected to the intermediate portion (18, 18'; 45; 77).

14. A position detector as set forth in claims 6 and 13, characterized in that the intermediate portion (18') includes a shaft (20') and two permanent magnets (19', 26) which are arranged at a spacing from each other in the axial direction of the shaft (20') and are non-rotatably connected to the shaft (20') one (19') of said permanent magnets essentially forming part of said energy storage means and the other one (26) essentially forming part of the means for converting the kinetic energy into an electrical energy pulse.

15. A position detector as set forth in claim 14, characterized in that the induction coil (34) is wound on to a cup-shaped double-E-core (28) the one (26) of that permanent magnets being rotatable in the interior of said core after abrupt acceleration of the intermediate portion (18').

16. A position detector as set forth in any of claims 10 to 13, characterized in that the permanent magnet (19; 55, 56;81) of the means for converting the kinetic energy into an electrical energy pulse is identical to the permanent magnet of the energy storage means.

17. A position detector as set forth in any preceding claim, characterized in that the electrical energy pulse is fed to the electronic processing means (91) in the form of a signal pulse.

18. A position detector as set forth in any preceding claim, characterized in that the electronic processing means (91) includes a storage means for electrical energy, which at least from time to time supplies its operating voltage, and in that a part of the electrical energy pulse is operable to charge said storage means.

19. A position detector as set forth in any preceding claim, characterized in that the position detector is a revolution counter, the moving body being formed by rotary shaft (1).

20. A position detector as set forth in claims 6 and 19 characterized in that the axis of the intermediate portion (45) is concentric with respect to the axis of the shaft (1).

21. A position detector as set forth in claims 6 and 19, characterized in that the axis of the intermediate portion (18, 18';77) extends parallel to the axis of the shaft (1) but does not coincide therewith.

22. A position detector as set forth in claims 6 and 19, characterized in that the axis of the intermediate portion extends at least substantially perpendicular to the axis of the shaft.

23. A position detector as set forth as set forth in any preceeding claim, characterized in that the electrical energy pulses which are fed to the electronic processing means (91) form the sole energy source thereof.

24. A position detector as set forth in any of claims 18 to 23 characterized in that the position detector (75) is used only for producing and supplying electrical supply energy for the electronic processing means (91) and for obtaining information about the direction of movement, and in that an additional sensor for possibly detecting position is provided.

25. A position detector as set forth in any of claims 2 to 24 characterized in that there is provided a return means which is formed by a spring means for returning the intermediate portion into a defined starting position after each of ist excursion movements.

26. A position detector as set forth in any of claims 12 to 25 characterized in that the coil (105) which is operable to generate signal energy pulses is wound on to the middle one of three limbs (102, 103, 104) of the E-shaped core, and that an auxiliary coil (106) is wound on to at least one (104) of the outer limbs of the core, the signals generated by the auxiliary coil being adapted to detect the direction of the movement to be monitored.

27. A position detector as set forth in any of claims 18 to 26, characterized in that the electrical energy storage means comprises a capacitor means.

## Revendications

1. Détecteur de position, à l'aide duquel une impulsion électrique est toujours créée et conduite à une électronique de traitement, lorsqu'un corps qui se déplace atteint une position prédéterminable, caractérisé en ce qu'un accumulateur d'énergie (2 ; 15, 16 ; 70, 71, 72 ; 85) est prévu qui, lorsque le corps (1 ; 40) se rapproche de la position prédéterminable accumule et stocke une partie de l'énergie du corps (1 ; 40) sous la forme d'énergie potentielle et lorsque le corps atteint ladite position, l'énergie potentielle stockée est brusquement libérée sous la forme d'énergie cinétique, et en ce qu'un dispositif (8, 12, 13 ; 19, 22, 25, 19', 26, 34; 55, 56, 58, 59, 60, 62, 63, 64 ; 81, 84, 88) est prévu pour transformer cette énergie cinétique en une impulsion d'énergie électrique qui est amenée à l'électronique de traitement (91).

2. Détecteur de position selon la revendication 1, caractérisé en ce que l'accumulateur d'énergie (15, 16 ; 70, 71, 72, 85) comprend une partie intermédiaire (18, 18' ; 45, 77) mcbile par rapport au corps qui se déplace (1 ; 40), ladite partie intermédiaire étant soumise à une haute accélération lors de la brusque libération de l'énergie potentielle.

3. Détecteur de position selon la revendication 2, caractérisé en ce que la partie intermédiaire (18, 18' ; 45 ; 77) présente une très petite inertie.

4. Détecteur de position selon la revendication 2 ou 3, caractérisé en ce qu'un arrangement est prévu qui freine fortement la partie intermédiaire (18, 18' ; 45 ; 77) lorsque la tension et la charge souhaitées ont été conduites à l'électronique de traitement (91).

5. Détecteur de position selon l'une des revendications 1 à 4, caractérisé en ce qu'un organe d'entraînement mécanique est prévu qui couple la partie intermédiaire au moins pour une partie du chemin de déplacement du corps qui se déplace avec le déplacement de ce dernier, lorsque, en raison d'une panne de l'accumulateur d'énergie, il n'y a aucune accélération de la partie intermédiaire par la libération d'énergie potentielle.

6. Détecteur de position selon l'une des revendications 2 à 5, caractérisé en ce que la partie intermédiaire (18, 18' ; 45 ; 77) est montée rotative sur un axe.

7. Détecteur de position selon l'une des revendications 1 à 6, caractérisé en ce que, lorsque la tension de fonctionnement de l'électronique de traitement peut être maintenue à l'aide d'une énergie extérieure, l'accumulateur d'énergie peut être découplée du déplacement dudit corps de telle sorte qu'il n'accumule et ne stocke plus aucune partie de l'énergie de déplacement dudit corps.

8. Détecteur de position selon l'une des revendications 1 à 7, caractérisé en ce que l'accumulateur d'énergie (2) comprend un arrangement de ressort (4) pour stocker de l'énergie potentielle, qui, lorsque ledit corps (1) se rapproche de la position prédéterminable, se tend de manière croissante et lorsque la position est atteinte se détend de telle sorte qu'au moins une partie de celle-ci est brusquement accélérée.

9. Détecteur de position selon l'une des revendications 1 à 7, caractérisé en ce que l'accumulateur d'énergie (15, 16 ; 70, 71, 72 ; 85) comprend pour le stockage d'énergie potentielle un arrangement d'aimants ayant au moins deux éléments (19, 22, 19', 22' ; 55, 56, 62, 63, 64, 67, 68, 69 ; 81, 84), dont un est formé par un aimant permanent (19, 19', 55, 56 ; 81) et l'autre est constitué d'un matériau ferromagnétique (22, 22' ; 62, 63, 64, 67, 68, 69 ; 84).

10. Détecteur de position selon la revendication 9, caractérisé en ce que l'élément (67, 68, 69) constitué à partir d'un matériau ferromagnétique est également un aimant permanent.

11. Détecteur de position selon l'une des revendications précédentes, caractérisé en ce que le dispositif pour transformer l'énergie cinétique en une impulsion d'énergie électrique comprend un aimant permanent (8 ; 19, 26 ; 55, 56 ; 81) qui, lors de la libération de l'énergie potentielle stockée est brusquement accéléré et qui se déplace alors avec une haute vitesse par rapport à une bobine d'induction (12 ; 25, 34 ; 58, 59, 60 ; 88).

12. Détecteur de position selon la revendication 11, caractérisé en ce que la bobine d'induction (88) est bobinée sur un noyau (84) en forme de E, devant les trois bras duquel se déplace successivement l'aimant permanent (81).

13. Détecteur de position selon l'une des revendications 2 à 10, en liaison avec la revendication 11 ou 12, caractérisé en ce que l'aimant permanent (19, 19', 55, 56 ; 81) est fixement relié avec la partie intermédiaire (18, 18' ; 45 ; 77).

14. Détecteur de position selon la revendication 6 et la revendication 13, caractérisé en ce que la partie intermédiaire (18') comprend un arbre (20') et deux aimants permanents (19', 26), qui sont disposés dans la direction axiale de l'arbre (20') en écartement l'un de l'autre et sont reliés fixement en rotation avec l'arbre (20') et dont un (19') appartient principalement à l'accumulateur d'énergie et l'autre (26) appartient principalement au dispositif pour transformer l'énergie cinétique en une impulsion d'énergie électrique.

15. Détecteur de position selon la revendication 14, caractérisé en ce que la bobine d'induction (34) est bobinée sur un noyau en forme de pot à deux E (28) à l'intérieur duquel tourne un des aimants permanents (26) après l'accélération brusque de la partie intermédiaire (18').

16. Détecteur de position selon l'une des revendications 10 à 13, caractérisé en ce que l'aimant permanent (19 ; 55, 56 ; 81) du dispositif pour transformer l'énergie cinétique en une impulsion d'énergie électrique est identique à l'aimant permanent de l'accumulateur d'énergie.

17. Détecteur de position selon l'une des revendications précédentes, caractérisé en ce que l'impulsion d'énergie électrique est conduite à l'électronique de traitement (91) sous la forme d'une impulsion de signal.

18. Détecteur de position selon l'une des revendications précédentes, caractérisé en ce que l'électronique de traitement (91) comprend un accumulateur pour l'énergie électrique, qui délivre au moins temporairement sa tension de fonctionnement, et en ce qu'une partie de l'impulsion d'énergie électrique sert au chargement de cet accumulateur.

19. Détecteur de position selon l'une des revendications précédentes, caractérisé en ce que le détecteur de position est un compte-tour, le corps qui se déplace étant formé par un arbre qui tourne (1).

20. Détecteur de position selon les revendications 6 et 19, caractérisé en ce que l'axe de la partie intermédiaire (45) est concentrique à l'axe de l'arbre (1).

21. Détecteur de position selon les revendications 6 et 19, caractérisé en ce que l'axe de la partie intermédiaire (18, 18'; 77) s'étend parallèlement à l'axe de l'arbre (1) mais ne coïncide cependant pas avec lui.

22. Détecteur de position selon les revendications 6 et 19, caractérisé en ce que l'axe de la partie intermédiaire s'étend environ perpendiculaire à l'axe de l'arbre.

23. Détecteur de position selon l'une des revendications précédentes, caractérisé en ce que les impulsions d'énergie électriques amenées à l'électronique de traitement (91) représentent la seule source d'énergie de l'électronique de traitement (91).

24. Détecteur de position selon l'une des revendications 18 à 23, caractérisé en ce que le détecteur de position (75) trouve une utilisation seulement pour créer et amener de l'énergie d'alimentation électrique pour l'électronique de traitement (91) ainsi que pour obtenir des informations sur la direction de déplacement et en ce qu'un capteur supplémentaire est prévu pour une éventuelle détermination de la position.

25. Détecteur de position selon l'une des revendications 2 à 24, caractérisé en ce qu'il est prévu un dispositif de rappel formé par un arrangement de ressort qui ramène la partie intermédiaire dans une position de départ définie après chaque déplacement.

26. Détecteur de position selon l'une des revendications 12 à 25, caractérisé en ce que la bobine (105) servant à créer des impulsions de signal/énergie est bobinée sur la branche du milieu des trois branches (102, 103, 104) du noyau en forme de E, et en ce qu'une bobine auxiliaire (106) est bobinée sur au moins une (104) des branches extérieures, dont les signaux servent à déterminer la direction du déplacement à surveiller.

27. Détecteur de position selon l'une des revendications 18 à 26, caractérisé en ce que l'accumulateur pour l'énergie électrique est formé par un arrangement de condensateur.
